# EUROPÄISCHE PATENTANMELDUNG

(11) **EP 2 468 978 A2**
(43) Veröffentlichungstag der Anmeldung: **27.06.2012**
(21) Anmeldenummer: 11001115.2
(22) Anmeldetag: 11.02.2011
(51) Int. Cl.: E04D 12/00

(54) **Vorrichtung zum Befestigen von Dachplatten**

(30) Priorität: 23.12.2010 AT 21262010
(71) Anmelder: BTS Befestigungselemente-Technik und Vertrieb Gesellschaft mbH, 5020 Salzburg (AT)
(72) Erfinder: Sawatzki, Günter, 8385 Neuhaus (AT)
(74) Vertreter: Puchberger, Peter

(57) **Zusammenfassung**

Die Erfindung betrifft eine Vorrichtung (1) zum Befestigen von Dachplatten (2) an Dachsparren (3), umfassend eine einstückige Klammer (4) mit einer Basis (5), einem ersten Halteschenkel (6) und einem zweiten Halteschenkel (7), sowie zumindest zwei, im wesentlichen gegenüberliegenden, die Befestigung einer Schraube (8) erlaubenden Öffnungen, wobei ein auf die Schraube (8) schraub-oder steckbarer, mit einer Durchgangsöffnung (9) versehener, beim Anziehen der Schraube (8) einen Anpressdruck auf den ersten Halteschenkel (6) erzeugender Feststellkörper (10) vorgesehen ist.

## Beschreibung

Die Erfindung betrifft eine Vorrichtung zum Befestigen von Dachplatten an Dachsparren, umfassend eine einstückige Klammer mit einer Basis, einem ersten Halteschenkel und einem zweiten Halteschenkel, sowie zumindest zwei, im wesentlichen gegenüberliegenden, die Befestigung einer Schraube erlaubenden Öffnungen.

Um eine Dachplatte, beispielsweise eine abgeschnittene Dachpfanne, an einem Dachsparren, insbesondere am Grat eines Daches zu befestigen, kann ein Dachdecker entweder ein Loch in die Dachplatte bohren und diesen dann mit einer langen Schraube am Dachsparren befestigen, oder auf eine Halteklammer zurückgreifen. Derartige Halteklammern werden im Allgemeinen auf die zu befestigende Dachplatte aufgeschlagen und mit einem langen Draht am Dachsparren festgebunden. Dies hat den Nachteil, dass mehrere Arbeitsschritte notwendig sind um eine Dachplatte am Dachsparren zu befestigen.

Aus der DE 20 2009 015 451 U1 ist eine Vorrichtung zur Befestigung von geschnittenen Dachplatten in Form einer einstückigen Klammer mit einer Basis, einem ersten und einem zweiten Halteschenkel sowie Öffnungen die die Befestigung einer Schraube zum Anschrauben an einem Dachsparren erlauben, bekannt.

Auch ist es beispielsweise aus der EP 1 154 094 A1 bekannt, einstückige Halteklammern mit einem im wesentlichen U-förmigen Grundkörper und Halteschenkein auszuführen, wobei aus den Innenflächen der Halteschenkel spitze und insbesondere federnde Vorsprünge hervorragen, um zu verhindern, dass die Dachplatte aus der Halteklammer entgleitet.

Diese Vorrichtungen aus dem Stand der Technik haben jedoch zahlreiche Nachteile, beispielsweise, dass mehrere Arbeitsschritte notwendig sind, um die Klammer zu befestigen. Dabei ergeben sich in der Realität vor allem zwei zeitaufwändige Arbeitsschritte: zunächst muss die Dachplatte fest mit der jeweils verwendeten Halteklammer verbunden, beispielsweise angeschraubt, eingesteckt, oder eingeklemmt, werden. Danach muss in einem zweiten Arbeitsschritt die Halteklammer mit dem Dachsparren verbunden werden, was beispielsweise durch Drähte oder Schrauben erfolgt.

Als weiterer Nachteil hat sich gezeigt, dass das Einspannen der Dachplatte an der Klammer nur unzureichend oder nur für Dachplatten mit bestimmter Dicke funktioniert. Eine zuverlässige Verbindung der Halteklammer mit der Dachplatte kann nur erfolgen, wenn die Dachplatte an mehreren Punkten gleichzeitig, vorzugsweise flächig, gehalten wird. Dies ist bei den Vorrichtungen aus dem Stand der Technik, die insbesondere durch Verkanten oder Verhaken funktionieren, nicht der Fall.

Die technische Aufgabe der vorliegenden Erfindung besteht demnach darin, eine Vorrichtung zur Befestigung von Dachplatten an Dachsparren zu schaffen, welche die oben angeführten Nachteile bestehender Halteklammern überwindet. Insbesondere soll es möglich sein, die Dachplatten mit nur einem Arbeitsschritt an dem Dachsparren zu befestigen. Die Vorrichtung soll möglichst einfach zu fertigen sein und wenig Material benötigen.

Diese Aufgabe wird erfindungsgemäß dadurch gelöst, dass ein auf die Schraube schraub- oder steckbarer, mit einer Durchgangsöffnung versehener, beim Anziehen der Schraube einen Anpressdruck auf den ersten Halteschenkel erzeugender Feststellkörper vorgesehen ist.

Durch die erfindungsgemäße Vorrichtung wird der Vorgang des Einspannens der Dachplatte und des Anschraubens am Dachsparren in einem einzigen Arbeitsschritt realisiert. Der Feststellkörper wird vor Einschrauben der Schraube auf dieser angebracht oder in eine Aussparung der Klammer locker eingelegt. Vorzugsweise kann die Vorrichtung bereits mit vormontiertem Feststellkörper und Schraube geliefert werden.

Der sich auf der Schraube befindliche Feststellkörper wird beim Drehen der Schraube mitgedreht und schleift bzw. reibt auf dem Halteschenkel der Klammer, es entsteht also eine Reibungskraft.

Wenn die Schraube in die Gewindebohrung des zweiten Halteschenkels eingreift, wird die Gewindesteigung an dieser Gewindebohrung negativ, was dazu führt, dass sich die Klammer zusammenzieht. Sobald die Halteschenkel auf die einzuspannende Dachplatte treffen, steigt die Reibungskraft zwischen dem Feststellkörper und dem Halteschenkel. Sobald diese Reibungskraft größer ist als die Reibungskraft zwischen der Schraube und dem Feststellkörper, bleibt der Feststellkörper stehen (dreht sich nicht mit der Schraube mit), und die Klammer wird nicht weiter gespannt - die Schraube dreht sich nun durch den Feststellkörper durch in den Dachsparren hinein. Die Klemmspannung an der Dachplatte bleibt erhalten und wird durch den Feststellkörper fixiert. Die Größe des Feststellkörpers, dessen Material, der Durchmesser seiner Öffnung, die Oberfläche des Halteschenkels und andere Merkmale beeinflussen, wann der Feststellkörper stehen bleibt und die Klammer aufhört, weiteren Spanndruck zu erzeugen.

Erfindungsgemäß ist vorgesehen, dass der erste Halteschenkel eine Aussparung aufweisen kann, die größer als der Gewindedurchmesser der einzuführenden Schraube ist, und der zweite Halteschenkel zumindest eine erste Gewindebohrung aufweisen kann, deren Durchmesser an den Gewindedurchmesser der einzuführenden Schraube angepasst ist.

Weiters kann der zweite Halteschenkel einen an die Dachplatte anpressbaren und im wesentlichen parallel zum ersten Halteschenkel ausgeführten Anpressabschnitt, einen den zweiten Halteschenkel stützenden Stützabschnitt und zumindest zwei, eine Verdrehung des zweiten Halteschenkels behindernde Materialstreifen umfassen.

Dadurch wird erreicht, dass sich beim Einspannen der Dachplatte der Anpressabschnitt und der erste Halteschenkel parallel aufeinander zu bewegen.

Weiters kann vorgesehen sein, dass der Stützabschnitt als ein, aus dem zweiten Halteschenkel ausgestanzter, spitzwinkelig zum Anpressabschnitt in Richtung der Basis abgewinkelter, das Wegknicken des zweiten Halteschenkels beim Anziehen der Schraube behindernder Materialstreifen ausgeführt ist.

Durch den Stützabschnitt, der Teil des zweiten Halteschenkels ist, kann der zweite Halteschenkel beim Anziehen der Schraube nicht nach unten wegknicken.

Vorzugsweise kann die erste Gewindebohrung im Anpressabschnitt des zweiten Halteschenkels ausgeführt sein, und der Stützabschnitt eine im wesentlichen gegenüberliegende zweite Gewindebohrung zur Aufnahme der Schraube umfassen, wodurch beim Anziehen der Schraube der Abstand zwischen Anpressabschnitt und Stützabschnitt im wesentlichen konstant und der Anpressabschnitt im wesentlichen parallel zum ersten Halteschenkel bleibt.

Die eine Verdrehung des zweiten Halteschenkels behindernden Materialstreifen können vorzugsweise als federnde, aus dem zweiten Halteschenkel ausgestanzte Drähte mit quadratischem oder rechteckigem Querschnitt ausgeführt sein.

Der erfindungsgemäße Feststellkörper kann einen in die Aussparung des ersten Halteschenkels einführbaren Hülsenabschnitt und einen, die Oberfläche des ersten Halteschenkels schleifend berührend ausgeführten Schleifabschnitt umfassen.

Erfindungsgemäß ist insbesondere vorgesehen, dass die Durchgangsöffnung des Feststellkörpers kleiner ist als der Gewindedurchmesser der Schraube. Je größer diese Bohrung ist, umso früher bleibt der Feststellkörper stehen, und umso geringer ist demnach die Spannkraft der Halteklammer.

Um die Herstellung der Vorrichtung zu erleichtern, kann der erste Halteschenkel und der zweite Halteschenkel durch Enden einer gebogenen Platte gebildet sein. Weiters kann die Klammer als Stanzbiegeteil ausgeführt sein.

Der erste Halteschenkel kann zum Fixieren der Dachplatte eine Zahnung, Kralle, Reibfläche, Rillen, Zacken, Auswölbungen oder dergleichen umfassen. Ebenso kann der zweite Halteschenkel zum Fixieren der Dachplatte eine Zahnung, Reibfläche, Rillen, Zacken oder dergleichen umfassen.

Die Basis der Klammer kann mit einem Falz ausgeführt sein um zu vermeiden, dass sich die Klammer beim Anziehen der Schraube verbiegt. Dieser Falz kann sich auch über die Basis hinaus, insbesondere zumindest auf den ersten Halteschenkel, erstrecken.

Die Klammer kann aus einem Metall, insbesondere Stahlblech, oder einem Kunststoff ausgeführt sein. Die Klammer kann weiters aus einem witterungsbeständigen Material ausgeführt sein, oder eine witterungsbeständige Beschichtung aufweisen.

Der Feststellkörpers ist vorzugsweise aus einem Kunststoff gefertigt, wobei erfindungsgemäß vorgesehen sein kann, dass der verwendete Kunststoff an das Anwendungsgebiet angepasst ist. Insbesondere kann für eine geringere Klemmkraft der Klammer ein weicher, und für eine höhere Klemmkraft ein harter Kunststoff vorgesehen sein. Der Feststellkörper kann vorzugsweise als Kunststoffmutter ausgeführt sein. Auch kann der Feststellkörper, um ein einfaches Anbringen an der Schraube zu ermöglichen, einen sechseckigen, insbesondere hexagonalen, Querschnitt aufweisen.

Erfindungsgemäß kann weiters vorgesehen sein, dass der erste Halteschenkel einen, den Feststellkörper beim Anziehen der Schraube aufspießenden Dorn aufweist. Dadurch kann erreicht werden, dass die Rotation des Feststellkörpers beim Anziehen der Schraube nicht durch Reibung an der Oberfläche des ersten Halteschenkels, sondern durch eine formschlüssige Verbindung mit dem Dorn beendet wird.

Weitere erfindungsgemäße Merkmale sind der Beschreibung, den Zeichnungen und den Ansprüchen zu entnehmen.

Die Erfindung wird nun anhand von Ausführungsbeispielen in den folgenden Figuren näher beschrieben. Es zeigen
- Fig. 1:: eine schematische dreidimensionale Ansicht einer erfindungsgemäßen Vorrichtung;
- Fig. 2a-2b:: einen schematischen Querschnitt einer erfindungsgemäßen Vorrichtung im offenen und geschlossenen Zustand:
- Fig. 3a-3b:: eine schematische dreidimensionale Ansicht einer erfindungsgemäßen Vorrichtung aus verschiedenen Blickwinkeln:
- Fig. 4a:: eine Ausführungsform des ersten Halteschenkels der erfindungsgemäßen Vorrichtung;
- Fig. 4b - 4c:: Ausführungsformen des ersten oder zweiten Halteschenkels der erfindungsgemäßen Vorrichtung;
- Fig. 5a-5c:: verschiedene Ansichten einer Ausführungsform des erfindungsgemäβen Feststellkörpers;
- Fig. 6a - 6b:: verschiedene Ansichten einer weiteren Ausführungsform des erfindungsgemäßen Feststellkörpers;
- Fig. 7a - 7b:: verschiedene Ansichten des ersten Halteschenkels mit eingesetztem Feststellkörper einer alternativen Ausführungsform der erfindungsgemäßen Vorrichtung.

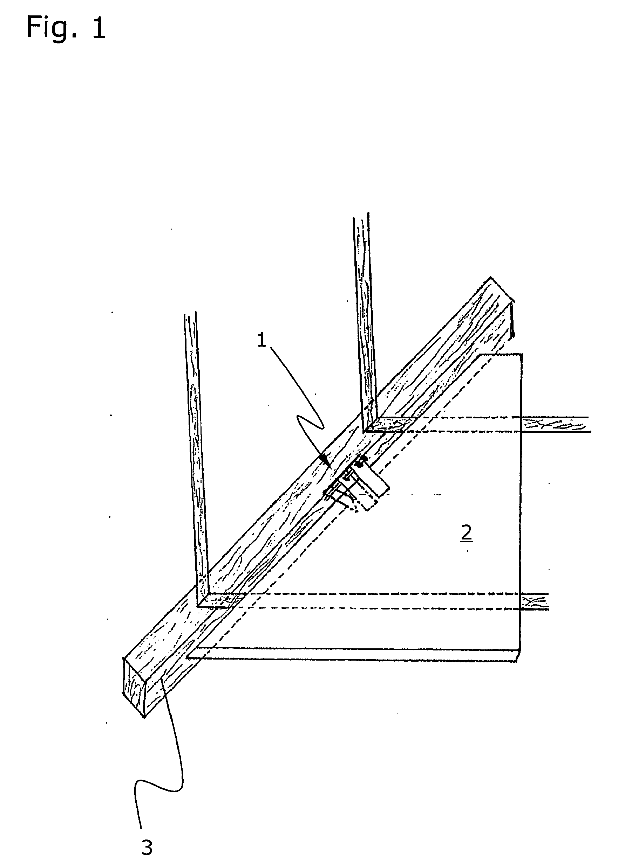

Fig. 1 zeigt eine schematische dreidimensionale Ansicht einer Ausführungsform der erfindungsgemäßen Vorrichtung 1 zur Befestigung von Dachplatten, insbesondere geschnittenen Dachplatten 2, an Dachsparren 3. Die Vorrichtung ist in Form einer, die Dachplatte einklemmende Klammer ausgeführt, welche mit einem Schrauben am Dachsparren angeschraubt ist.

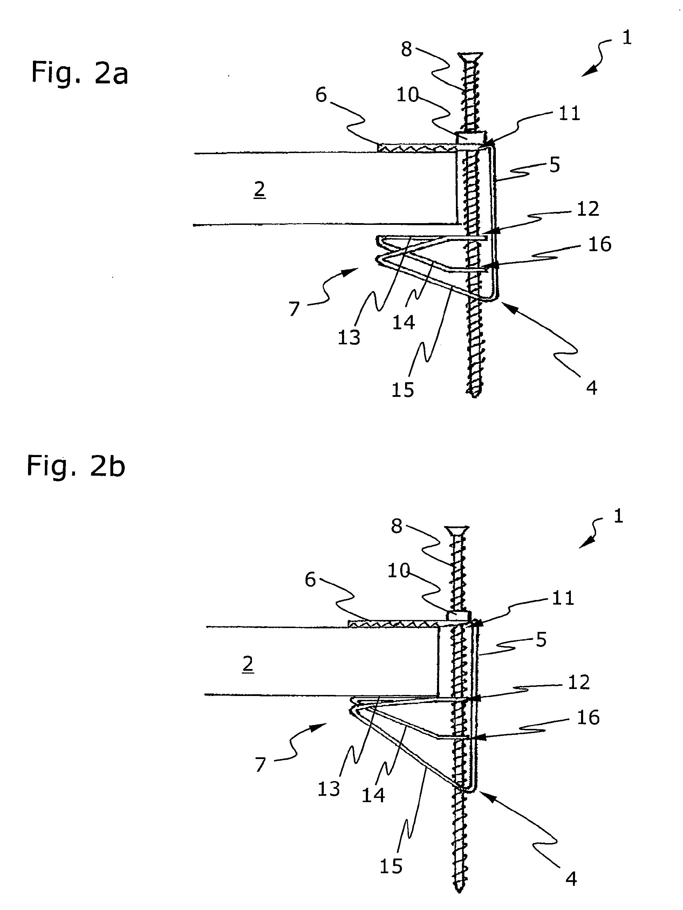

Fig. 2a und Fig. 2b zeigen schematische Querschnitte einer Ausführungsform der erfindungsgemäßen Vorrichtung 1 im offenen (Fig. 2a) und geschlossenen (Fig. 2b) Zustand. Im geschlossenen Zustand ist die Vorrichtung 1 an einer Dachplatte 2 befestigt. Die Vorrichtung 1 umfasst eine Klammer 4 mit einer Basis 5, einem ersten Halteschenkel 6 und einem zweiten Halteschenkel 7. Der erste Halteschenkel 6 ist im wesentlichen rechtwinkelig an der Basis 5 angebracht.

Der zweite Halteschenkel 7 umfasst in diesem Ausführungsbeispiel einen an die Dachplatte anpressbaren Anpressabschnitt 13, einen Stützabschnitt 14 und zwei Materialstreifen 5. Der erste Halteschenkel 6 weist eine Aussparung 11 auf, die einen Feststellkörper 10 aufnimmt. Gegenüber dieser Aussparung 11 verfügt der zweite Halteschenkel 7 über eine erste Gewindebohrung 12 und eine zweite Gewindebohrung 16. Diese ermöglichen eine Befestigung der Schraube 8, mit der die Vorrichtung an dem Dachsparren 3 befestigt werden kann.

Bei der Befestigung der Vorrichtung 1 wird zunächst die Klammer 4 wie in Fig. 2a gezeigt auf die zu befestigende Dachplatte aufgeschoben. Danach wird der Feststellkörper 10, der über eine Durchgangsöffnung 9 verfügt, auf die zu verwendende Schraube 8 aufgedreht oder aufgesteckt. Dabei ist es wesentlich, dass der Feststellkörper 10 fest auf der Schraube sitzt, und nicht bei leichter Belastung abrutscht. Danach wird die Schraube 8 mit aufgestecktem Feststellkörper 10 in die Aussparung 11, welche einen Durchmesser aufweist, der größer ist als der Gewindedurchmesser der Schraube 8, eingeführt und danach in die erste Gewindebohrung 12 sowie die zweite Gewindebohrung 16 eingeschraubt. Sobald der Feststellkörper 10 am ersten Halteschenkel 6 anliegt, beginnt sich die Klammer zusammenzuziehen, mit anderen Worten, der erste Halteschenkel 6 und der zweite Halteschenkel 7 bewegen sich aufeinander zu und die Dachplatte 2 wird zwischen den Halteschenkeln eingeklemmt.

Alternativ kann die Vorrichtung auch derart verwendet werden, dass der Feststellkörper 10 zunächst locker in die Aussparung 11 eingelegt bzw. eingesteckt wird.

Im vorliegenden Ausführungsbeispiel ist der Feststellkörper als Kunststoffmutter ausgeführt. Diese ist mit einem Durchgangsloch ausgeführt, dessen Durchmesser kleiner ist als der Gewindedurchmesser der Schraube 8. Aus diesem Grund muss sich die Schraube 8 selbst ein Gewinde in den Feststellkörper schneiden, wodurch eine Reibkraft erzeugt wird.

Der Feststellkörper dreht sich beim Befestigen der Schraube mit und schleift am ersten Halteschenkel 6. Sobald der erste Halteschenkel 6 und der zweite Halteschenkel 7 auf die Dachplatte 2 treffen, steigt die Reibungskraft zwischen dem Feststellkörper und dem ersten Halteschenkel 6 an. Wenn die Reibungskraft größer ist als die Reibungskraft zwischen der Schraube 8 und dem Feststellkörper 10 (der Kunststoffmutter), dann bleibt der Feststellkörper 10 stehen und die Klammer 4 wird nicht mehr weiter gespannt. Die Schraube dreht sich nun durch die Klammer 4 in den Dachsparren 3 hinein. Dies entspricht dem Zustand, der in Fig. 2b schematisch gezeigt ist.

Der Zeitpunkt, an dem der Feststellkörper stehen bleiben soll, kann durch die Größe der Durchgangsöffnung 9 bestimmt werden. Je größer die Durchgangsöffnung 9 ist, desto früher bleibt der Feststellkörper 10 stehen und desto früher hört die Klammer 4 auf, sich weiter zu spannen.

Um zu erreichen, dass sich der zweite Halteschenkel 7 im Bereich des Anpressabschnitts 13 beim Zusammenziehen der Klammer nicht verbiegt bzw. verdreht, verfügt der zweite Halteschenkel 7 über den oben erwähnten Stützabschnitt 14 und die Materialstreifen 15. Indem sich die Schraube 8 sowohl durch die erste Gewindebohrung 12, als auch durch die zweite Gewindebohrung 16 schrauben muss, ist der Abstand zwischen dem Anpressabschnitt 13 und dem Stützabschnitt 14 stets konstant. Es verbiegen sich lediglich die Materialstreifen 15, welche beidseitig des Anpressabschnitts 13 angebracht sind. Durch diese Konstruktion wird erreicht, dass der Anpressabschnitt 13 und der erste Halteschenkel 6 beim Einschrauben der Schraube 8 parallel aufeinander zuwandern, und sich der Anpressabschnitt 13 nicht verbiegt oder verdreht. Die einzigen Teile, die bei der Montage verformt werden, sind die beiden Materialstreifen 15.

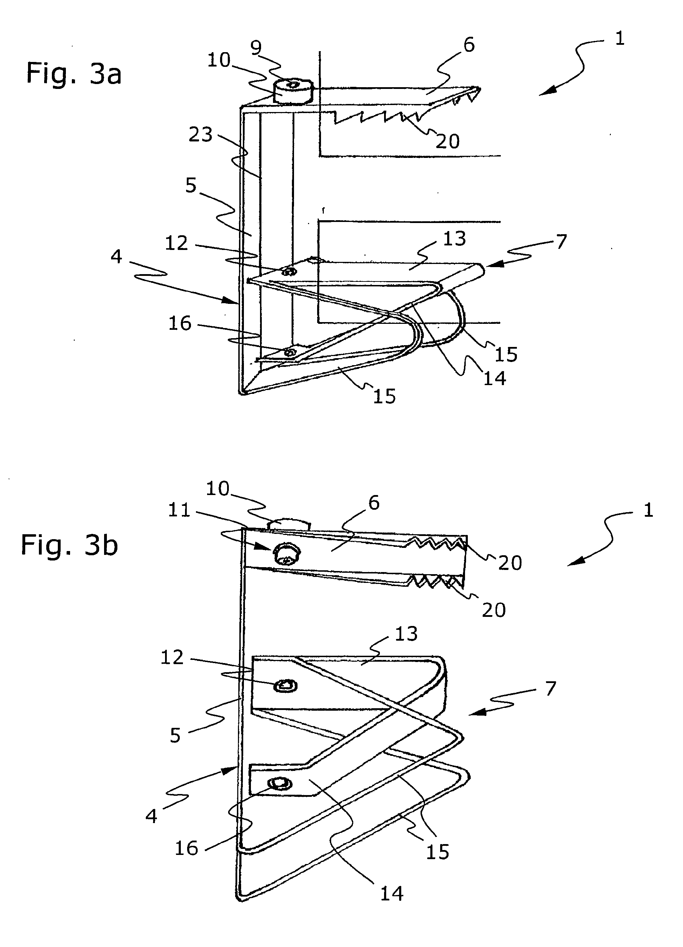

Die Figuren 3a und 3b zeigen eine schematische dreidimensionale Ansicht einer erfindungsgemäßen Vorrichtung aus verschiedenen Blickwinkeln. Die Vorrichtung 1 umfasst die Klammer 4, welche über eine Basis 5, einen ersten Halteschenkel 6 und einen zweiten Halteschenkel 7 verfügt. In eine Aussparung 11 des ersten Halteschenkels 6 ist ein Feststellkörper 10 eingesteckt, der über eine Durchgangsöffnung 9 verfügt. Der zweite Halteschenkel 7 ist in Form eines mehrfach gebogenen Stanzteils ausgeführt und umfasst einen Anpressabschnitt 13, einen Stützabschnitt 14 und zwei Materialstreifen 15. Im Anpressabschnitt 13 befindet sich eine erste Gewindebohrung 12, und im Stützabschnitt 14 eine korrespondierende zweite Gewindebohrung 16. Die Materialstreifen 15 befinden sich beidseitig des Anpressabschnitts 13. Der erste Halteschenkel 6 ist mit einer Zahnung 20 ausgeführt, um die Befestigung an der Dachplatte zu verbessern. Weiters ist in dieser Figur ersichtlich, dass die Basis 5 einen durchgehenden Falz 23 aufweist, um zu verhindern, dass sich beim Befestigen der Vorrichtung die Basis 5 verbiegt.

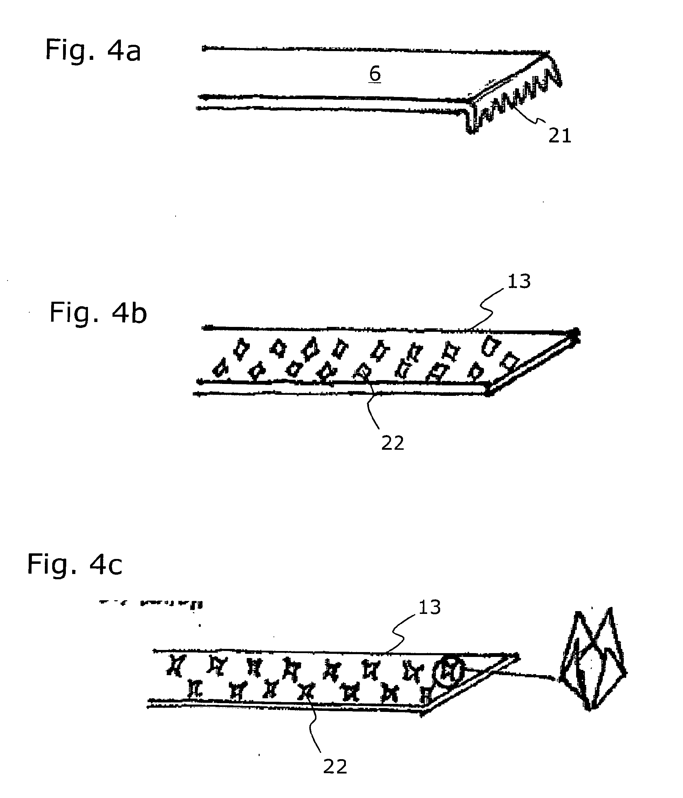

Die Figur 4a zeigt eine alternative Ausführungsform des ersten Halteschenkels 6. Dieser ist in diesem Ausführungsbeispiel mit einer Kralle 21 ausgestattet. Weiters zeigen die Figuren 4b und 4c eine alternative Ausführungsform des Anpressabschnitts 13. Fig. 4b zeigt die Oberseite (die der Dachplatte zugewandte Seite), und Fig. 4c die Unterseite (die der Dachplatte abgewandte Seite). In diesem Ausführungsbeispiel sind zur Verbesserung der Haltekraft nach außen gebogene Zacken 22 vorgesehen.

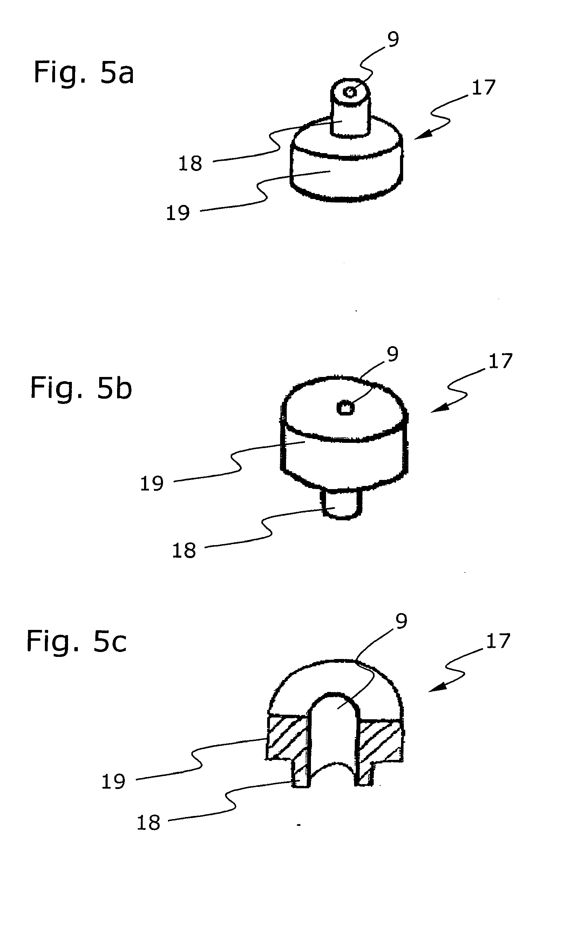

Weiters zeigen die Figuren 5a bis 5c den Feststellkörper, der in diesem Ausführungsbeispiel als Kunststoffmutter 17 ausgeführt ist. Diese weist einen Hülsenabschnitt 18, einen Schleifabschnitt 19 und eine Durchgangsöffnung 9 auf. Bei der Montage wird die Kunststoffmutter 17 mit dem Hülsenabschnitt 18 in die Aussparung 11 eingesetzt, und danach die Schraube 8 in die Durchgangsöffnung 9 eingeschraubt. Alternativ kann auch zuerst die Kunststoffmutter 17 auf die Schraube 8 aufgedreht werden. Die Durchgangsöffnung 9 ist nicht mit einem Innengewinde ausgeführt, somit muss sich die Schraube 8 erst beim Anziehen selbst ein Gewinde schneiden.

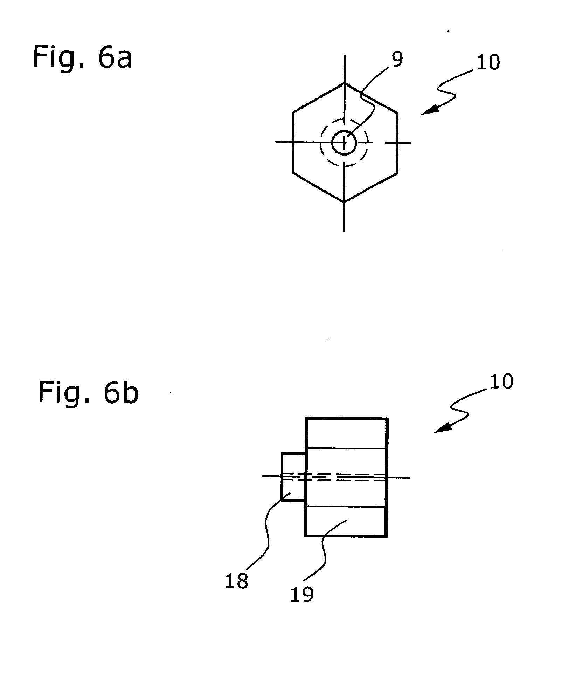

Die Figuren 6a und 6b zeigen eine alternative Ausführungsform des Feststellkörpers 10 der erfindungsgemäßen Vorrichtung. In diesem Ausführungsbeispiel hat der Schleifabschnitt 19 des Feststellkörpers 10 einen hexagonalen Querschnitt, wodurch das Anbringen des Feststellkörpers 10 an der Schraube 8 wesentlich erleichtert wird.

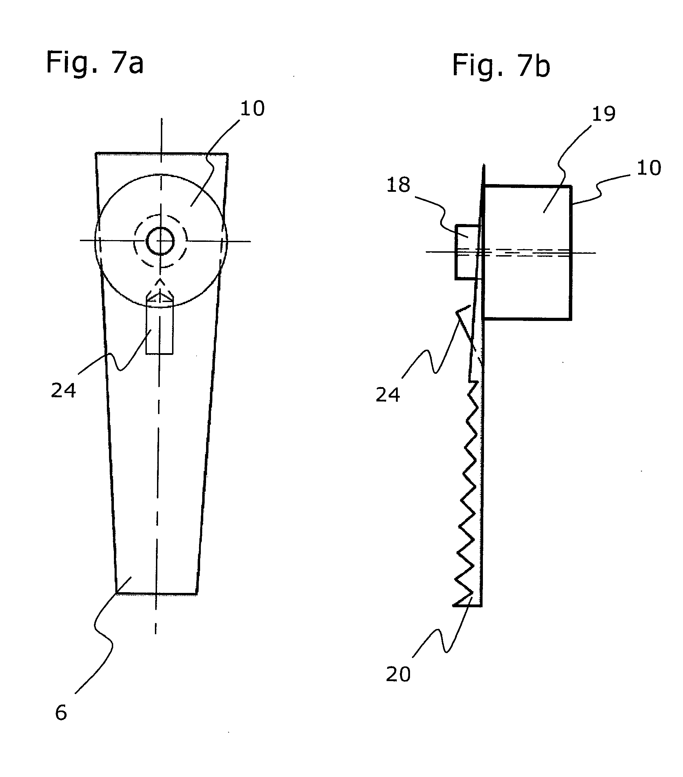

Schließlich zeigen die Figuren 7a und 7b verschiedene Ansichten des ersten Halteschenkels 6 mit eingesetztem Feststellkörper 10 einer alternativen Ausführungsform der erfindungsgemäßen Vorrichtung. Der erste Halteschenkel 6 hat eine Zahnung 20 und weist einen, den Feststellkörper 10 beim Anziehen der Schraube 8 aufspießenden Dorn 24 auf. Dadurch wird eine formschlüssige Verbindung des Feststellkörpers 10 mit dem Dorn 24 bzw. dem ersten Halteschenkel 6 erreicht. Der Dorn 24 kann vorzugsweise aus dem ersten Halteschenkel 6 ausgestanzt und in Richtung der einzuspannenden Dachplatte 2 vorgespannt bzw. gebogen sein.

### Bezugszeichenliste

- 1: Vorrichtung
- 2: Dachplatten
- 3: Dachsparren
- 4: Klammer
- 5: Basis
- 6: Erster Halteschenkel
- 7: Zweiter Halteschenkel
- 8: Schraube
- 9: Durchgangsöffnung
- 10: Feststellkörper
- 11: Aussparung
- 12: Erste Gewindebohrung
- 13: Anpressabschnitt
- 14: Stützabschnitt
- 15: Materialstreifen
- 16: Zweite Gewindebohrung
- 17: Kunststoffmutter
- 18: Hülsenabschnitt
- 19: Schleifabschnitt
- 20: Zahnung
- 21: Kralle
- 22: Zacken
- 23: Falz
- 24: Dorn

## Patentansprüche

1. Vorrichtung (1) zum Befestigen von Dachplatten (2) an Dachsparren (3), umfassend eine einstückige Klammer (4) mit einer Basis (5), einem ersten Halteschenkel (6) und einem zweiten Halteschenkel (7), sowie zumindest zwei, im wesentlichen gegenüberliegenden, die Befestigung einer Schraube (8) erlaubenden Öffnungen, **dadurch gekennzeichnet, dass** ein auf die Schraube (8) schraub- oder steckbarer, mit einer Durchgangsöffnung (9) versehener, beim Anziehen der Schraube (8) einen Anpressdruck auf den ersten Halteschenkel (6) erzeugender Feststellkörper (10) vorgesehen ist.

2. Vorrichtung nach Anspruch 1, **dadurch gekennzeichnet, dass** der erste Halteschenkel (6) eine Aussparung (11) aufweist, die größer als der Gewindedurchmesser der einzuführenden Schraube (8) ist, und der zweite Halteschenkel (7) zumindest eine erste Gewindebohrung (12) aufweist, deren Durchmesser an den Gewindedurchmesser der einzuführenden Schraube (8) angepasst ist.

3. Vorrichtung nach Anspruch 1 oder 2, **dadurch gekennzeichnet, dass** der zweite Halteschenkel (7) einen an die Dachplatte (2) anpressbaren und im wesentlichen parallel zum ersten Halteschenkel (6) ausgeführten Anpressabschnitt (13), einen den zweiten Halteschenkel (7) stützenden Stützabschnitt (14) und zumindest zwei, eine Verdrehung des zweiten Halteschenkels (7) behindernde Materialstreifen (15) umfasst.

4. Vorrichtung nach Anspruch 3, **dadurch gekennzeichnet, dass** der Stützabschnitt (14) als ein, aus dem zweiten Halteschenkel (7) ausgestanzter, spitzwinkelig zum Anpressabschnitt (13) in Richtung der Basis (5) abgewinkelter, das Wegknicken des zweiten Halteschenkels (7) beim Anziehen der Schraube (8) behindernder Materialstreifen ausgeführt ist.

5. Vorrichtung nach Anspruch 3 oder 4, **dadurch gekennzeichnet, dass** die erste Gewindebohrung (12) im Anpressabschnitt (13) des zweiten Halteschenkels (7) ausgeführt ist und der Stützabschnitt (14) eine im wesentlichen gegenüberliegende zweite Gewindebohrung (16) zur Aufnahme der Schraube (8) umfasst, wodurch beim Anziehen der Schraube (8) der Abstand zwischen Anpressabschnitt (13) und Stützabschnitt (14) im wesentlichen konstant und der Anpressabschnitt (13) im wesentlichen parallel zum ersten Halteschenkel (6) bleibt.

6. Vorrichtung nach einem der Ansprüche 3 bis 5, **dadurch gekennzeichnet, dass** die eine Verdrehung des zweiten Halteschenkels (7) behindernden Materialstreifen (15) als federnde, aus dem zweiten Halteschenkel (7) ausgestanzte Drähte mit quadratischem oder rechteckigem Querschnitt ausgeführt sind.

7. Vorrichtung nach einem der vorhergehenden Ansprüche, **dadurch gekennzeichnet, dass** der Feststellkörper (10) einen in die Aussparung (11) des ersten Halteschenkels (6) einführbaren Hülsenabschnitt (18) und einen, die Oberfläche des ersten Halteschenkels (6) schleifend berührend ausgeführten Schleifabschnitt (19) umfasst.

8. Vorrichtung nach einem der vorhergehenden Ansprüche, **dadurch gekennzeichnet, dass** die Durchgangsöffnung (9) des Feststellkörpers (10) kleiner ist als der Gewindedurchmesser der Schraube (8).

9. Vorrichtung nach einem der vorhergehenden Ansprüche, **dadurch gekennzeichnet, dass** der erste Halteschenkel (6) und der zweite Halteschenkel (7) durch Enden einer gebogenen Platte gebildet sind.

10. Vorrichtung nach einem der vorhergehenden Ansprüche, **dadurch gekennzeichnet, dass** die Klammer (4) als Stanzbiegeteil ausgeführt ist.

11. Vorrichtung nach einem der vorhergehenden Ansprüche, **dadurch gekennzeichnet, dass** der erste Halteschenkel (6) zum Fixieren der Dachplatte (2) eine Zahnung (20), Kralle (21), Reibfläche, Rillen, Zacken, Auswölbungen oder dergleichen umfasst.

12. Vorrichtung nach einem der vorhergehenden Ansprüche, **dadurch gekennzeichnet, dass** der zweite Halteschenkel (7) zum Fixieren der Dachplatte (2) eine Zahnung, Reibfläche, Rillen, Zacken (22) oder dergleichen umfasst.

13. Vorrichtung nach einem der vorhergehenden Ansprüche, **dadurch gekennzeichnet, dass** die Basis (5) der Klammer (4) mit einem Falz (23) ausgeführt ist um zu vermeiden, dass sich die Klammer (4) beim Anziehen der Schraube (8) verbiegt.

14. Vorrichtung nach Anspruch 13, **dadurch gekennzeichnet, dass** sich der Falz (23) über die Basis (5) der Klammer (4) hinaus zumindest auf den ersten Halteschenkel (6) erstreckt.

15. Vorrichtung nach einem der vorhergehenden Ansprüche, **dadurch gekennzeichnet, dass** der Feststellkörper (10) als Kunststoffmutter (17) ausgeführt ist.

16. Vorrichtung nach einem der vorhergehenden Ansprüche, **dadurch gekennzeichnet, dass** der Feststellkörper (10) einen sechseckigen Querschnitt aufweist.

17. Vorrichtung nach einem der vorhergehenden Ansprüche, **dadurch gekennzeichnet, dass** der erste Halteschenkel (6) einen, den Feststellkörper (10) beim Anziehen der Schraube (8) aufspießenden Dorn (24) aufweist.

18. Vorrichtung nach einem der vorhergehenden Ansprüche, **dadurch gekennzeichnet, dass** die Klammer (4) aus einem Metall, insbesondere Stahlblech, einem Kunststoff, oder einem witterungsbeständigen Material ausgeführt ist, und/oder eine witterungsbeständige Beschichtung aufweist.
